# EUROPEAN PATENT SPECIFICATION

(11) **EP 2 873 687 B1**
(45) Date of publication and mention of the grant of the patent: **06.06.2018**
(21) Application number: 13397539.1
(22) Date of filing: 13.11.2013
(51) Int. Cl.: C08J 5/02, C09D 101/10, C08K 3/34, C08L 101/10

(54) **A polymer composition and a method for its preparation**
Polymerzusammensetzung und Verfahren zu deren Herstellung
Composition polymère et procédé pour sa préparation

(43) Date of publication of application: 20.05.2015
(73) Proprietor: GVK Coating Technology Oy, 21600 Parainen (FI)
(72) Inventor: Hara, Mika, 21420 Lieto (FI); Hermans, Simon, 60348 Norrköping (SE); Seppinen, Anssi, 21670 Pärnäinen (FI)
(74) Representative: Seppo Laine Oy

(56) References cited:
- EP-A1- 0 857 772
- WO-A1-02/44263
- US-A- 5 391 594
- US-A- 6 001 907
- US-A1- 2009 171 040
- US-A1- 2011 214 796
- US-A1- 2012 022 184

## Description

The invention relates to a flexible and water resistant polymer composition and the preparation thereof. More particularly, the invention relates to a crosslinked composition comprising a coated filler. The composition is suited for preparing water resistant membranes for e.g. wet rooms.

### Background

Present-day building standards for wet rooms, i.e. bathrooms, shower stalls and other facilities where water is used liberally and which mostly are fitted with a floor drain, are rigorous. The seams of the ceramic tiling often used in wet rooms are not water tight, and if no barrier is provided beneath the tiling, humidity problems are bound to occur. In apartment buildings, there is a risk of water leaking into the structure and finding its way to neighboring apartments e.g. on the floor below. Wooden structures rot when a certain humidity is maintained, the adhesion between different construction materials suffer and this can lead to collapses, and mold growth can lead to serious health hazards. Thus, it is of great importance that the moisture occurring in wet rooms is confined to the wet room itself and does not penetrate the floor and walls, causing problems which may go unnoticed until costly repair work is unavoidable.

Thus, in many areas the use of a water-impermeable layer is mandatory at least in rooms having a floor sink. Such a layer is customarily applied before the final surface structure, e.g. ceramic tiling, is prepared, and the existence and tightness of such a layer must be verified before the tiling work commences.

Commercial packages for the provision of water barriers often comprise a polymer coating which is to be applied to a specified thickness and may be reinforced with flexible web accessories, in particular in corners, at construction material seams at pipe penetrations and around floor drains. Depending on the material that shall be coated, the system may include various primers and the like to ensure proper adhesion.

For the purpose of the present discussion, the expressions moisture barrier, water barrier, waterproofing membrane, moisture insulation, water insulation, watertight covering all refer to layered arrangements for the purpose of preventing water in any form from penetrating from a wet room area into the surrounding structures.

The water resistance of membrane systems for the above-described purpose is determined using official standards. In the EU, the ETAG-022 (European Technical Approval Guideline) and EN 14891 collections of norms apply to the certification of products for wet room water insulation. In addition, various national methods and standards are in use.

The polymer dispersions used for wet room moisture barriers may be based on various kinds of acrylates, bitumen dispersions, polyvinylidene chloride, two-component epoxies or polyurethanes and their copolymers.

The final properties of a wet room moisture barrier system are also heavily dependent on correct working methods, and therefore the education and certification of professionals carrying out the work plays a significant role.

The following properties are essential for a good wet room moisture barrier system:
- resistance to water penetration
- resistance to penetration of water vapour
- flexibility and strength
- adhesion to underlaying material
- adhesion properties for tile fastening products
- stability of the polymer/binder in alkaline conditions
- mould resistance of the wet room moisture barrier
- ease of application, easily achieved adequate film thickness

There is a constant need for improvement in the above properties, and commercial products are continuously being compared and evaluated.

In US patent application 2011/0214796 is disclosed a styrene-butadiene-based aqueous dispersion including epoxysilane, useful for providing high strength binder formulations.

### Disclosure of the invention

A novel polymer composition for use in a wet room moisture barrier system has now been invented as well as a method has for preparing it. It has been found that the combination of a polymer functionalized with silane and a filler coated with functional silane results in outstanding properties in products for water barriers. Polymers useful as binders in the present invention are dispersable polymers containing functional groups available for cross linking. Hydroxy and amino groups are examples of such groups. Examples of possible polymers are styrene acrylate, vinyl acetate -ethylene copolymers (VAE) and polyurethane. Preferably, the polymer is a carboxylated styrene-butadiene polymer.

The polymer composition of the method according to the invention is a dispersion capable of forming a water resistant film upon drying (or curing), based on polymer, a silane crosslinking agent and a filler coated with a silane crosslinking agent. The polymer composition according to the invention has excellent properties in terms of water tightness with pressurized water, elongation at break and tensile strength.

A typical composition according to the invention is prepared from 10 to 90 % by weight of a styrene-butadiene copolymer; a silane crosslinking agent selected from the group consisting of R₁R₂R₃SiCH₂(CH₂)ₙYCH₂-X, where R₁ or R₂ or R₃ is OMe, OEt, CH₃,CH₂CH₃ ; n is 0-8; Y is O or CH₂, and X is a reactive organic moiety, e.g. epoxy, vinyl, amino, alkyl, methacrylate or sulfur. The typical composition further comprises 1 to 80 % by weight of an inorganic filler material which has been surface treated with crosslinking agent from the group consisting of R₁R₂R₃SiCH₂(CH₂)ₙYCH₂-X, where R₁ or R₂ or R₃ is OMe, OEt, CH₃,CH₂CH₃; n is 0-8; Y is O or CH₂, and X is a reactive organic moiety e.g. epoxy, vinyl, amino, alkyl, methacrylate or sulfur.

Examples of useful styrene-butadiene copolymers are Lipaton SB 47B40 and Lipaton SB 60B11 from Synthomer; EOC L6263; Styrofan D422 from BASF SE. An example of a styrene acrylate is Acronal S533 from BASF SE; an example of VAE is Vinnapas 551 ED from Wacker Chemie AG.

Examples of useful epoxysilanes are CoatOSil 2287 and Silquest A-1871 from Momentive Performance Materials and Z-6040 Silane from Dow Corning.

Examples of fillers useful in the present invention are calcium carbonate, talc, clays, mica, bentonite, barium sulfate, titanium dioxide, zinc oxide, quartz, glass in different forms, feldspar, fused and fumed silica, sand, nepheline syanite and perlite.

The epoxysilane coated filler is preferably a wollastonite filler. An example of a suitable silane coated wollastonite filler is Norwoll 7 st4 from Nordkalk Oy Ab, Parainen, Finland.

### Detailed disclosure

The invention is disclosed in further detail in the following.

A styrene-butadiene copolymer (commonly styrene-butadiene rubber, SBR) is basically characterised by the following repeating unit

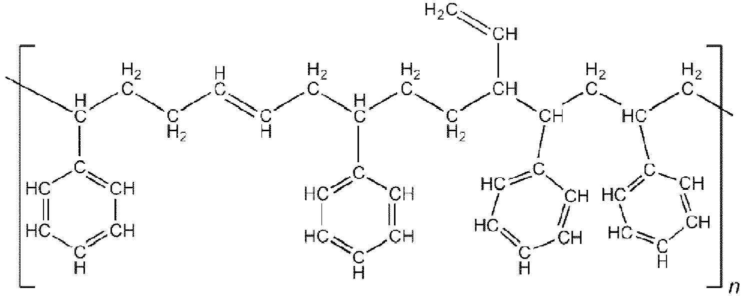

The polymer may be crosslinked using various agents. Sulfur is used in rubber-type products. When the SBR is carboxylated, it may easily be dispersed and further options are available for crosslinking.

Silanes is a versatile class of compounds useful as coupling agents. They are silicon-based chemicals having two types of reactivity. A typical general structure is

(RO)₃Si(CH2)ₙYCH₂-X

where RO is a hydrolysable group such as methoxy or ethoxy, Y is CH₂ or O, and X is an organofunctional group such as amino, methacryloxy or epoxy. A silane coupling agent can act as an interface between an inorganic substrate such as those materials commonly used as fillers in polymer products, and an organic material, such as the polymer backbone.

In epoxysilanes, the X group consists of an oxirane ring, which can couple, for example, to R-OH and R-NH₂ groups in an appropriately substituted styrene-butadiene copolymer. The resulting functionalized polymer has the ability to form covalent bonds to OH groups on the surface of inorganic fillers.

Preferably, the styrene-butadiene copolymer according to the invention is functionalized with a reagent comprising glycidoxysilane. Examples of useful glycidoxysilanes are 3-glycidoxypropylsilane, 3-glycidoxypropylmethyldiethoxysilane and 3-glycidoxypropyltriethoxysilane. In the method according to the invention, the styrene-butadiene copolymer dispersion is initially treated with the crosslinking agent, mixed and allowed to react for a period, after which the filler is added as well as any required additives. The reaction period may be e.g. 1 h to several days, but is dependent on the reagent and often indicated by the manufacturer.

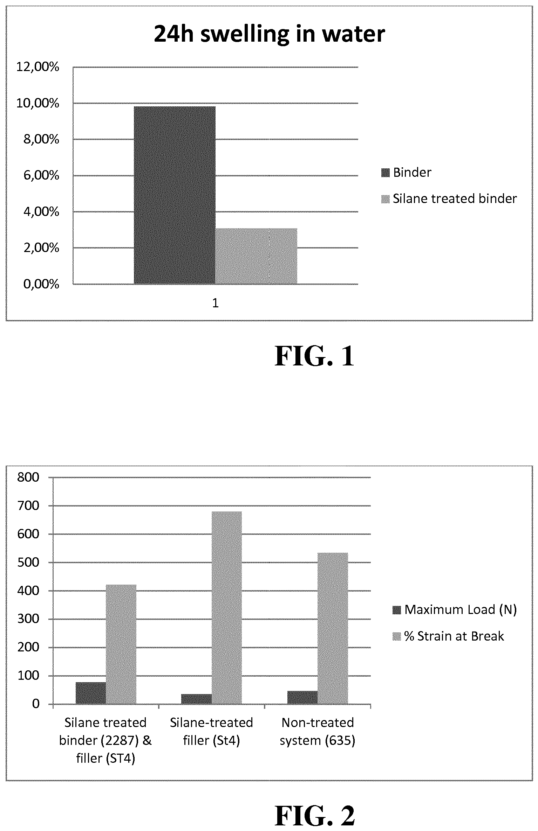

Fillers in polymer products may be coated with silane reagents to alter or enhance their affinity to the binder. The same reagents mentioned above for treating the styrene-butadiene copolymer may be used. In accordance with the invention, the filler is silane coated, which leads to advantageous properties as shown in Figures 1 and 2.

Figure 1 shows the water absorption properties of a styrene-butadiene copolymer with and without silane functionalization in terms of swelling during a 24 hour exposure to water. It is clearly seen that the silane treated binder is significantly less prone to swelling.

Figure 2 shows that the system of both silane functionalized binder and silane functionalized filler shows significantly better tensile strength properties than both the corresponding system without silane functionalization and the system having silane functionalization in the binder only. Also the strain, or elongation at break which means the elongation of the original sample in percentage at the point of break, is higher.

As the skilled person will be aware, the dispersion comprising styrene-butadiene copolymer treated with crosslinking agent and surface-treated filler will also contain additives such as thickeners, antifoaming agents, wetting agents, biocides, pH-regulating agents, pigments and coalescing agents.

The composition according to the invention is suitable for use as a humidity barrier in for example, wet rooms, swimming pools, tanks for non-potable water and in various building constructions details in order to keep water from e.g. rain, soil or condensation of air humidity out of the structures.

### Example

A composition was prepared according to the following recipe:

| | % (weight) |
|---|---|
| SBR dispersion (50%solids) | 75.0 |
| 3-glycidoxypropyl methyl diethoxysilane | 0.5 |
| silane treated filler | 20.0 |
| rheology modifier | 2.0 |
| defoamer | 0.5 |
| pigment | 2.0 |
| total | 100.0 |

A film made by allowing the above composition to cure showed excellent properties in terms of low water absorption and high tensile strength.

## Claims

1. A dispersion capable of forming a water resistant film upon drying, said dispersion comprising a polymer selected from the group consisting of styrene acrylate, vinyl acetate-ethylene copolymers (VAE), polyurethane and styrene-butadiene polymer crosslinked with a silane crosslinking agent; and an inorganic filler material coated with a silane crosslinking agent, the inorganic filler material being selected from the group consisting of calcium carbonate, wollastonite, talc, titanium dioxide, zinc oxide, feldspar and perlite.

2. A dispersion according to claim 1, wherein the polymer is styrene-butadiene copolymer.

3. A dispersion according to claim 1, wherein the inorganic filler material is coated wollastonite.

4. A dispersion according to claim 1, wherein the polymer has been functionalized with a crosslinking agent comprising epoxysilane.

5. A dispersion according to claim 4, wherein the epoxysilane comprises glycidoxysilane.

6. A dispersion according to claim 5, wherein the glycidoxysilane comprises 3-glycidoxypropylmethyldiethoxysilane or 3-glycidoxypropyltriethoxysilane.

7. A method for preparing a dispersion according to any of claims 1 to 6, comprising the steps of
- providing a polymer dispersion,
- adding a silane crosslinking agent with mixing,
- allowing to react,
- adding an inorganic filler material coated with a silane crosslinking agent.

8. A method according to claim 7, wherein the polymer is styrene-butadiene copolymer.

9. A method according to claim 7, wherein the inorganic filler material is coated wollastonite.

10. A method according to claim 7, wherein the silane crosslinking agent comprises epoxysilane.

11. A method according to claim 10, wherein the silane crosslinking agent comprises glycidoxysilane.

12. A method according to claim 11, wherein the silane crosslinking agent comprises 3-glycidoxypropylmethyldiethoxysilane or 3-glycidoxypropyltriethoxysilane.

## Patentansprüche

1. Dispersion, die nach Trocknen einen wasserabstoßenden Film bilden kann, wobei die Dispersion ein Polymer, ausgewählt aus der Gruppe, bestehend aus Styrolacrylat, Vinylacetat-Ethylen-Copolymeren (VAE), Polyurethan und Styrol-Butadien-Polymer, vernetzt mit einem Silan-Vernetzungsmittel; und ein anorganisches Füllstoffmaterial, beschichtet mit einem Silan-Vernetzungsmittel, wobei das anorganische Füllstoffmaterial aus der Gruppe, bestehend aus Calciumcarbonat, Wollastonit, Talkum, Titandioxid, Zinkoxid, Feldspat und Perlit, ausgewählt ist, umfasst.

2. Dispersion nach Anspruch 1, wobei das Polymer Styrol-Butadien-Copolymer ist.

3. Dispersion nach Anspruch 1, wobei das anorganische Füllstoffmaterial beschichtetes Wollastonit ist.

4. Dispersion nach Anspruch 1, wobei das Polymer mit einem Epoxysilan umfassenden Vernetzungsmittel funktionalisiert wurde.

5. Dispersion nach Anspruch 4, wobei das Epoxysilan Glycidoxysilan umfasst.

6. Dispersion nach Anspruch 5, wobei das Glycidoxysilan 3-Glycidoxypropylmethyldiethoxysilan oder 3-Glycidoxypropyltriethoxysilan umfasst.

7. Verfahren zur Herstellung einer Dispersion nach einem der Ansprüche 1 bis 6, umfassend die Schritte
- Bereitstellen einer Polymerdispersion,
- Zugeben eines Silan-Vernetzungsmittels unter Mischen,
- Reagierenlassen,
- Zugeben eines mit einem Silan-Vernetzungsmittel beschichteten anorganischen Füllstoffmaterials.

8. Verfahren nach Anspruch 7, wobei das Polymer Styrol-Butadien-Copolymer ist.

9. Verfahren nach Anspruch 7, wobei das anorganische Füllstoffmaterial beschichtetes Wollastonit ist.

10. Verfahren nach Anspruch 7, wobei das Silan-Vernetzungsmittel Epoxysilan umfasst.

11. Verfahren nach Anspruch 10, wobei das Silan-Vernetzungsmittel Glycidoxysilan umfasst.

12. Verfahren nach Anspruch 11, wobei das Silan-Vernetzungsmittel 3-Glycidoxypropylmethyldiethoxysilan oder 3-Glycidoxypropyltriethoxysilan umfasst.

## Revendications

1. Dispersion capable de former un film résistant à l'eau lors de son séchage, ladite dispersion comprenant un polymère choisi parmi le groupe constitué par du styrène acrylate, des copolymères d'acétate de vinyle-éthylène (VAE), du polyuréthane et un polymère de styrène-butadiène réticulé avec un agent de réticulation de type silane ; et une matière de charge inorganique enduite d'un agent de réticulation de type silane, la matière de charge inorganique étant choisie parmi le groupe constitué par le carbonate de calcium, la wollastonite, le talc, le dioxyde de titane, l'oxyde de zinc, le feldspath et la perlite.

2. Dispersion selon la revendication 1, dans laquelle le polymère est un copolymère de styrène-butadiène.

3. Dispersion selon la revendication 1, dans laquelle la matière de charge inorganique est de la wollastonite enduite.

4. Dispersion selon la revendication 1, dans laquelle le polymère a été fonctionnalisé avec un agent de réticulation comprenant de l'époxysilane.

5. Dispersion selon la revendication 4, dans laquelle l'époxysilane comprend du glycidoxysilane.

6. Dispersion selon la revendication 5, dans laquelle le glycidoxysilane comprend du 3-glycidoxypropylméthyldiéthoxysilane ou du 3-glycidoxypropyltriéthoxysilane.

7. Procédé pour préparer une dispersion selon l'une quelconque des revendications 1 à 6, comprenant les étapes consistant à :
- procurer une dispersion polymère ;
- ajouter un agent de réticulation de type silane, tout en mélangeant ;
- laisser réagir ;
- ajouter une matière de charge inorganique enduite avec un agent de réticulation de type silane.

8. Procédé selon la revendication 7, dans lequel le polymère est un copolymère de styrène-butadiène.

9. Procédé selon la revendication 7, dans lequel la matière de charge inorganique est de la wollastonite enduite.

10. Procédé selon la revendication 7, dans lequel l'agent de réticulation comprend de l'époxysilane.

11. Procédé selon la revendication 10, dans lequel l'agent de réticulation de type silane comprend du glycidoxysilane.

12. Procédé selon la revendication 11, dans lequel l'agent de réticulation de type silane comprend du 3-glycidoxypropylméthyldiéthoxysilane ou du 3-glycidoxypropyltriéthoxysilane.
